# FASCICULE DE BREVET EUROPEEN

(11) **EP 1 331 165 B1**
(45) Date de publication et mention de la délivrance du brevet: **02.11.2006**
(21) Numéro de dépôt: 03009142.5
(22) Date de dépôt: 16.03.2000
(51) Int. Cl.: B62J 15/02

(54) **Dispositif de fixation de garde-boue de bicyclette**
Befestigungseinrichtung für ein Fahrradschutzblech
Bicycle mudguard mounting arrangement

(30) Priorité: 16.03.1999 FR 9903251
(43) Date de publication de la demande: 30.07.2003
(62) Demande divisionnaire de: 00400734.0
(73) Titulaire: Zefal, 45150 Jargeau (FR)
(72) Inventeur: Brunet, Patrice, 92200 Neuilly Sur Seine (FR)
(74) Mandataire: Pontet, Bernard

(56) Documents cités:
- EP-A- 0 742 137
- DE-U- 29 614 001
- GB-A- 190 224 477

## Description

La présente invention concerne un dispositif servant à la fixation d'un garde-boue de bicyclette aux tringles radiales partant du moyeu de la roue.

Un dispositif de ce genre est par exemple décrit dans le brevet européen EP 0 742 137. Il comprend un corps en matériau plastique comprenant une paire de perçages parallèles pour le passage de deux tringles, une rainure destinée à loger le bord longitudinal du garde-boue et un perçage, essentiellement perpendiculaire aux perçages de ladite paire, débouchant à l'intérieur de ladite rainure et permettant à l'aide d'une vis autotaraudeuse de fixer à la fois ledit dispositif sur les tringles et de fixer le garde-boue.

Le document DE 29614001, qui est considéré comme étant l'état de la technique le plus proche, divulgue un dispositif de fixation de garde-boue de bicyclette comprenant des moyens de fixation du dispositif à une tringle et des moyens de fixation du garde-boue comprenant une vis de fixation solidarisant ce dispositif et le garde-boue, et une rainure dans laquelle est introduit le bord longitudinal du garde-boue. Cette rainure présente un fond de retenue de forme complémentaire à un bourrelet ménagé dans le bord longitudinal du garde-boue.

La présente invention a pour but de proposer un dispositif de ce type qui, par rapport aux dispositifs de l'art antérieur, soit moins coûteux à réaliser et permettre d'installer le garde-boue sur le dispositif facilement, notamment sans outils.

Elle propose un dispositif de fixation de garde-boue de bicyclette selon la revendication 1.

Le dispositif de fixation selon l'invention peut ainsi être fabriqué d'un seul tenant, avec des moyens de fixation du garde-boue à la tringle qui font partie intégrante du dispositif, ce qui permet de fixer le garde-boue sans outils.

Dans un premier mode de réalisation, les moyens d'empêchement du déplacement longitudinal du garde-boue dans la rainure comprennent la butée du dispositif contre les bords latéraux d'un bossage ménagé en saillie vers l'extérieur dans le garde-boue.

Dans un second mode de réalisation, les moyens d'empêchement du déplacement longitudinal du garde-boue dans la rainure comprennent un logement dans lequel est adapté à être inséré un bossage ménagé en saillie vers l'intérieur dans le garde-boue.

Dans un troisième mode de réalisation, les moyens d'empêchement du déplacement longitudinal du garde-boue dans la rainure comprennent une paroi ménagée dans la rainure coopérant avec une encoche de forme complémentaire ménagée transversalement dans le bord longitudinal du garde-boue.

Le dispositif de fixation selon l'invention peut en outre être caractérisé par un corps allongé et au moins une patte de fixation ayant une zone de raccordement avec la face extérieure dudit corps et faisant saillie de manière à définir entre elle et la surface extérieure du corps les moyens de fixation du bord longitudinal du garde-boue.

Lorsqu'elle est mise en oeuvre dans le premier mode de réalisation, cette patte de fixation est de préférence adaptée à être insérée dans le bossage ménagé en saillie sur l'extérieur du garde-boue, les bords latéraux de ladite patte de fixation étant adaptés à coopérer avec les bords latéraux dudit bossage.

Le dispositif est de préférence réalisé en matériau synthétique, notamment par moulage.

Il peut prendre la forme d'un corps allongé avec une ou plusieurs pattes de fixation raccordées au corps allongé et recourbées vers ledit corps, formant entre elles et ledit corps la rainure de retenue du bourrelet du garde-boue.

La retenue du bourrelet longitudinal du garde-boue dans la rainure peut comprendre aussi une patte supérieure située au dessus de la ou des pattes de fixation et dont la face inférieure est adaptée à contacter la paroi extérieure du garde-boue. On peut aussi prévoir en outre un pincement de la paroi du garde-boue entre la ou les pattes de fixation et une ou plusieurs pattes supérieures.

Selon un autre exemple de réalisation, le dispositif est constitué de deux demi-coquilles qui sont assemblées et fixées ensemble en enserrant la tringle.

Suivant une autre caractéristique de l'invention, le dispositif est pourvu de moyens de butée empêchant un déplacement du garde-boue dans son sens longitudinal.

Ces moyens comprennent par exemple la butée du dispositif contre les bords latéraux d'un bossage ménagé en saillie vers l'extérieur dans le garde-boue.

Ils peuvent aussi être constitués d'un logement dans lequel est adapté à être inséré un bossage ménagé en saillie vers l'intérieur dans le garde-boue.

On peut aussi ménager une cloison dans la rainure coopérant avec une encoche de forme complémentaire ménagée transversalement dans le bord longitudinal du garde-boue.

De préférence, et de manière à proposer un dispositif se montant entièrement sans outils, les moyens de fixation du dispositif à la tringle comportent une ouverture débouchant perpendiculairement dans un passage pour la tringle et des moyens de blocage de la tringle introduits dans ladite ouverture et coopérant avec la tringle. Ces moyens de blocage sont par exemple constitués d'un bouchon ayant deux pattes de blocage adaptées à venir s'insérer de part et d'autre de la tringle, la face intérieure desdites pattes comportant des stries adaptées à coopérer avec des stries complémentaires ménagées sur la surface extérieure de la tringle selon une direction perpendiculaire à l'axe général de la tringle. En outre, en disposant les stries sur la tringle sur une certaine hauteur, on peut réaliser un moyen de réglage du dispositif en fonction du bicyclette à équiper.

La présente invention sera mieux comprise et d'autres caractéristiques et avantages apparaîtront à la lumière de la description qui va suivre d'exemples de réalisation, description faite en référence aux dessins sur lesquels :
- la figure 1 montre schématiquement un premier exemple de fixation entre un garde-boue et la tringle (non revendiqué);
- la figure 2 est une vue en coupe longitudinale du dispositif selon la ligne II-II de la figure 1;
- la figure 3 est une vue en coupe selon la ligne III-III de la figure 2 montrant également la tringle et le bouchon de blocage de la tringle ;
- la figure 4 est une vue en coupe similaire à la figure 2 avec le garde-boue en place illustrant les moyens de retenue et de butée ;
- la figure 5 montre en coupe similaire à la figure 4 un deuxième exemple de du dispositif illustrant des moyens de retenue ;
- la figure 6 est une vue en coupe du dispositif de la figure 5 montrant des moyens de butée ;
- la figure 7 est une vue en élévation du dispositif selon la flèche VII de la figure 6 ;
- la figure 8 est une vue en coupe similaire à la figure 6 illustrant une première variante de moyens de butée du dispositif ;
- la figure 9 est une vue en élévation du dispositif selon la flèche IX de la figure 8 ;
- la figure 10 est une vue en perpective montrant une deuxième variante de moyens de butée du dispositif et un garde-boue associé ;
- la figure 11 est une vue de côté montrant un troisième exemple de réalisation du dispositif selon l'invention ;
- la figure 12 est une vue en coupe longitudinale du dispositif de la figure 11 ;
- la figure 13 est une vue en coupe selon la ligne XIII-XIII de la figure 11;
- la figure 14 est une vue en élévation selon la flèche XIV de la figure 12 ; et
- les figures 15A et 15B représentent respectivement une vue en coupe le mode de réalisation d'un dispositif selon l'invention et une vue en coupe d'un écrou conique de fixation mis en oeuvre dans ce dispositif.

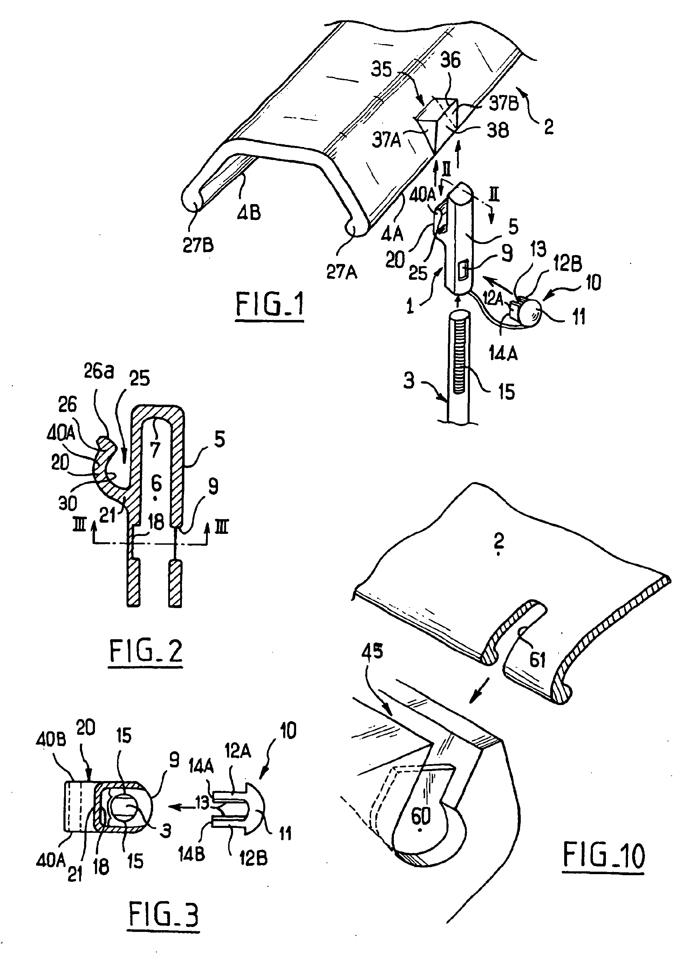

En se référant aux figures 1 à 4, un dispositif de fixation 1 est destiné à fixer un garde-boue 2 à une tringle 3 partant du moyeu de la roue du bicyclette (non représenté). Deux dispositifs de fixation 1 sont utilisés pour fixer les deux bords longitudinaux 4A et 4B du garde-boue 2.

Le dispositif de fixation 1 comporte un corps allongé 5 dans lequel est prévu un passage 6 pour la tringle 3 et fermé par un fond 7. Pour la fixation du dispositif 1 à la tringle 3, une ouverture 9 est ménagée dans le corps 5 débouchant perpendiculairement dans le passage 6 coopérant avec un bouchon 10 ayant une tête 11 et deux pattes de blocage 12A, 12B s'étendant dans des plans parallèles. Les faces en regard l'une de l'autre des pattes de blocage 12A, 12B sont munies de stries 13 parallèles s'étendant dans une direction perpendiculaire au bord avant respectif 14A, 14B de chacune des pattes 12A, 12B. Sur la tringle 3 sont également ménagées des stries 15 dans des plans perpendiculaires à l'axe de la tringle 3 et sur deux zones latérales diamétralement opposées. Le diamètre du passage 6 dans le corps 5 est tel que, une fois la tringle 3 introduite, le bouchon 10 peut être insérer par l'ouverture 9 de manière que ses deux pattes de blocages 12A, 12B, encadrent la tringle 3, les stries 13 du bouchon 10 et les stries 15 de la tringle s'interengageant pour obtenir le blocage du dispositif 1 sur la tringle. La hauteur des stries 15 sur les zones latérales de la tringle est telle qu'un réglage du dispositif est possible selon la bicyclette à équiper. Un décrochement 18, ménagé dans l'épaisseur de la paroi avant 18 du corps 5 en regard de l'ouverture 9, sert à caler les extrémités des pattes de blocage 12A, 12B lorsque le bouchon 10 est en place.

Pour la fixation du garde-boue, une patte de fixation 20 est ménagée en saillie à l'opposé de l'ouverture 9. Comme on le voit sur la figure 3 notamment, la largeur de la patte 20 est sensiblement égale à la largeur ou diamètre du corps 5. La patte 20 comporte une zone de raccordement 21 avec le corps 5 du dispositif au dessus du décrochement 18. La patte de fixation 20 s'étend globalement en direction de l'extrémité supérieure 22 du corps 5 à distance de la paroi extérieure 24 du corps 5 de manière à ce qu'une rainure 25 soit définie entre cette patte de fixation 20 et ladite paroi 24. Une portion d'extrémité 26 de la patte 20 est recourbée en direction du corps allongé 5 de manière que la rainure 25 présente une forme complémentaire à un bourrelet 27A, 27B terminant respectivement dans le bord longitudinal 4A, 4B du garde-boue et de manière que la rainure soit pourvue d'un fond élargi 30.

Le dispositif 1 ainsi que le bouchon 10 et un cordon 32 reliant le bouchon au corps 5 sont fabriqués d'un seul tenant par moulage d'un matériau synthétique. Ce matériau autorise une certaine flexibilité de la patte de fixation 20 autour de sa zone de raccordement et permet au bourrelet du bord du garde-boue d'être introduit jusque dans le fond élargi 30 de la rainure 25, la patte 20 reprenant ensuite sa position de repos.

Des moyens de butée sont également prévus pour empêcher un déplacement longitudinal du garde-boue. Ils comprennent un bossage 35 ménagé en saillie sur l'extérieur du garde-boue dans le prolongement du bord longitudinal 4A, 4B du garde-boue. Le bossage 35 présente une arrête saillante 36, deux bords latéraux 37A et 37B et un bord avant 38 qui s'étend jusqu'au bord longitudinal 4A, 4B. La patte de fixation 20 est adaptée à être introduite dans le bossage 35, de sorte que la butée de ses bords latéraux 40A, 40B contre la face intérieure des bords latéraux 37A, 37B du bossage, empêche le déplacement longitudinal du garde-boue.

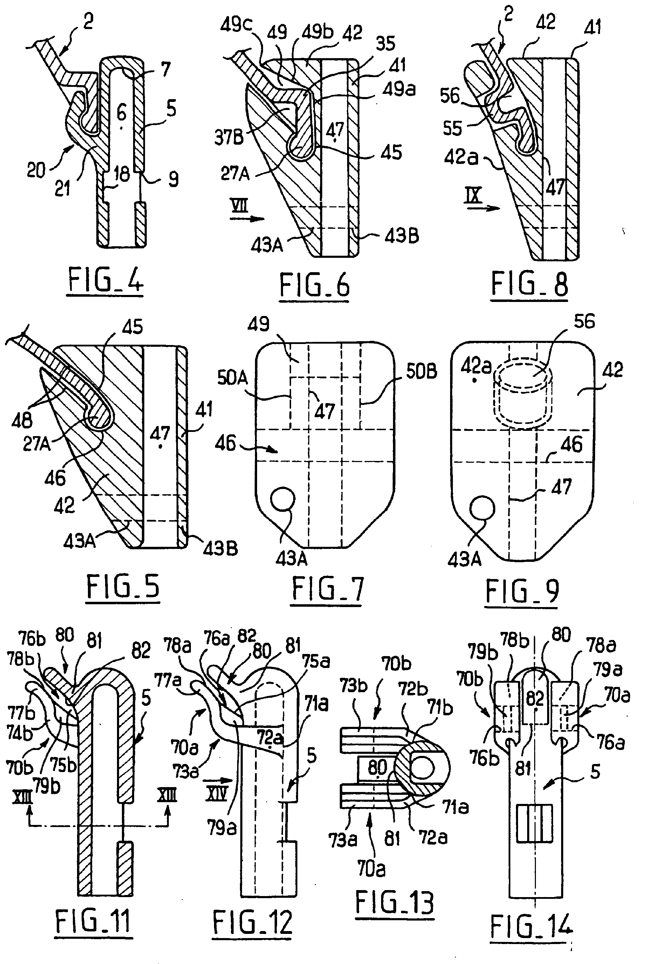

Sur les figures 5 à 7, est représenté un autre exemple de réalisation dans lequel, le dispositif est constitué de demi-coquilles arrière 41 et avant 42 qui viennent enserrer la tringle en comportant chacune à cet effet une rainure de section demi-circulaire sur toute sa hauteur, les deux demi-coquilles étant assemblées et fixées à la tringle à l'aide d'une vis de serrage (non représentée) introduite dans deux perçages taraudés 43A, 43B ménagés perpendiculairement et dans le prolongement l'un de l'autre dans les deux demi-coquilles. L'extrémité inférieure des demi-coquilles est conformée en pointe. La rainure de retenue, référencée 45 ici, du bourrelet 27A, 27B, du garde-boue est ménagée dans la demi-coquille avant 42 laquelle présente à cet effet une plus grande épaisseur que la demi-coquille arrière 43. La rainure 45 comporte un fond élargi 46 de forme complémentaire au bourrelet 27A, 27B et une portion inclinée 48 dans laquelle se trouve le bord du garde-boue en arrière du bourrelet. Comme on le voit sur la figure 6, pour réaliser les moyens de butée empêchant le déplacement dans le sens longitudinal du garde-boue, la rainure 45 présente une zone élargie du côté du passage 47 de la tringle, centré par rapport à celui-ci, et formant un logement 49 dans lequel le bossage 35 en saillie sur l'extérieur du garde-boue est destiné à être introduit. Le logement 49 comporte une paroi arrière 49a destinée à venir au contact du bord avant droit 37B du bossage 35 et une paroi supérieure 49b inclinée reliant la paroi arrière 49a à l'entrée 49c de la rainure 45 et des parois latérales 50A, 50B (voir figure 7), les bords latéraux 37A, 37B du bossage venant en butée contre ces parois latérales.

Les figures 8 et 9 montrent, par rapport à l'exemple des figures 5 à 7, une première variante de réalisation des moyens de butée dans laquelle, un bossage 55 est cette fois ménagé en saillie vers l'intérieur du garde-boue, coopérant avec un logement cylindrique 56 ménagé dans la demi-coquille avant 42 en direction de la paroi avant 42a de celle-ci et débouchant dans la rainure de retenue 45 du garde-boue.

La figure 10 montre une deuxième variante de réalisation des moyens de butée comprenant une paroi 60 ménagée perpendiculairement dans le fond de la rainure 45 à distance des extrémités de la rainure introduite dans une encoche 61 ménagée transversalement dans le bord du garde-boue 2.

Les figures 11 à 14 illustrent un autre dispositif de fixation. Cet exemple présente des points communs avec le premier exemple montré aux figures 1 à 4, en ce qui concerne le corps 5 (à l'exception du décrochement 18 qui n'est pas reproduit ici) et les moyens de fixation du dispositif à la tringle, qui ne seront donc pas décrits ici. Le dispositif selon cet exemple est caractérisé par la présence de deux pattes de fixation 70a et 70b, possédant, comme on le voit mieux sur la figure 12, des zones de raccordement respectivement 71a, 71b, au corps 5 du dispositif situées latéralement, les pattes encadrant ainsi le corps 5 en s'étendant vers l'avant de celui-ci. Plus précisément ici et comme on le voit sur la figure 13, les pattes comprennent une première portion 72a, 72b leur permettant de s'écarter du corps 5 et vers l'avant de celui-ci, puis une seconde portion 73a, 73b dans laquelle sont ménagés les moyens de fixation du garde-boue, lesdites seconde portions de chaque patte s'étendant globalement dans des plans parallèles. Comme on le voit de côté sur les figures 11 et 12, la seconde portion 73a, 73b comprend une partie 74a, 74b recourbée vers le haut du corps 5 formant, avec la paroi avant du corps 5, le fond respectivement 75a, 75b d'une rainure 76a, 76b, adapté à coopérer avec le bourrelet longitudinal 27A, 27B du garde-boue et une partie d'extrémité 77a, 77b recourbée vers l'extérieur du dispositif de manière à former une surface supérieure 78a, 78b adaptée à venir en contact avec la face intérieure du garde-boue. Dans cet exemple de réalisation, il est prévu en outre une patte supérieure 80 située entre les pattes de fixation 70a et 70b et ayant une zone de raccordement 81 au corps 5 située au dessus du plan contenant les zones de raccordement 71a, 71b desdites pattes de fixation. Cette patte supérieure 80 présente une face inférieure 82 s'étendant dans un plan parallèle à celui contenant la face supérieure 78a, 78b de la partie d'extrémité des pattes de fixation et adapté à venir au contact de la surface extérieure de la paroi du garde-boue. Les moyens de butée empêchant le déplacement dans le sens longitudinal du garde-boue sont ici constitués d'une paroi 79a, 79b disposée dans chaque rainure 76a, 76b coopérant chacune avec une encoche, ménagée à cet effet transversalement dans le bord longitudinal du garde-boue, comme c'est le cas dans la variante représentée à la figure 10.

Lorsque le garde-boue est en place, son bourrelet longitudinal 27A, 27B, est logé dans le fond 75a, 75b, des deux rainures 76a, 76b, des pattes de fixation, ses encoches étant placées sur les parois de butée 79a, 79b correspondantes. La paroi du garde-boue en arrière du bourrelet 27A, 27B est pincée par les portions d'extrémité 77a, 77b des pattes de fixation et par la patte supérieure 80, permettant ainsi d'assurer une meilleure retenue du bord longitudinal du garde-boue.

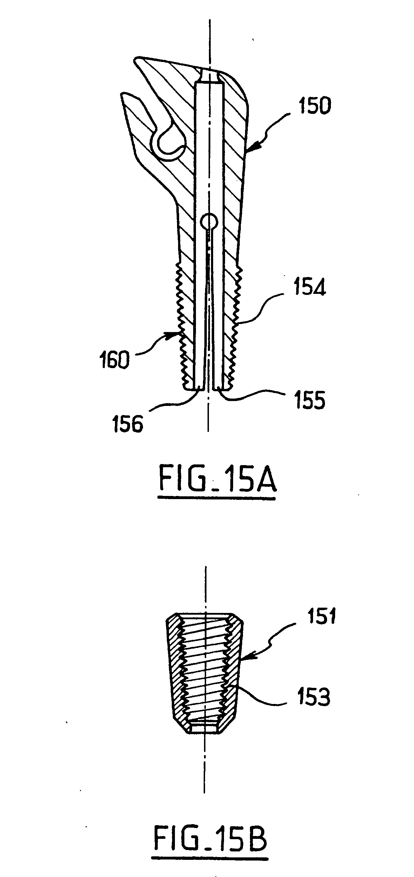

Dans le mode de réalisation selon l'invention illustré par les figures 15A et 15B, le dispositif de fixation selon l'invention 150 comprend, au titre des moyens de fixation à la tringle, dans la partie du serre-tringle prévue pour coiffer la tringle, deux ailes de resserrage 155, 156 définissant un passage de tringle 160 sensiblement conique avec une surface extérieure conique filetée 154 coopérant avec un écrou conique 151 taraudé dans sa surface intérieure 153. Ce mode de fixation de la tringle au dispositif selon l'invention est particulièrement efficace car le serrage de l'écrou conique garantit un verrouillage de la position relative de la tringle dans le passage de tringle.

Il va de soi que d'autres variantes de réalisation sont possibles, notamment en ce qui concerne les moyens de fixation du dispositif à la tringle. Par exemple pour améliorer le guidage de l'introduction du bouchon de fixation coopérant avec la tringle et son maintien on peut prévoir des chanfreins. Egalement, à la place ou en complément du décrochement 18 visible sur la figure 3 qui permet de caler l'extrémité des pattes du bouchon de fixation, on pourrait prévoir des décrochements dans la paroi du corps pour loger la tête du bouchon.

En variante, on pourrait également prévoir des moyens de guidage du positionnement de la tringle, comme une conformation concave de la face intérieure de la paroi du corps dans laquelle viendrait se caler la tringle, ou bien un fond pour ledit corps dans lequel serait ménagé un perçage oblong. De même au niveau de l'ouverture dans laquelle est introduit le bouchon, on pourrait prévoir des moyens de positionnement de la tringle de ce type, par exemple une ou plusieurs cloisons raccordées perpendiculairement à la paroi du corps et comportant un perçage oblong pou le passage de la tringle.

Par ailleurs, au lieu d'avoir deux demi-coquilles, on pourrait avoir à la place un seul corps de dispositif dans lequel serait par exemple ménagé un passage pour la tringle.

Le dispositif pourrait comporter également un deuxième passage de tringle.

Par ailleurs encore, on peut alléger le dispositif et/ou améliorer l'élasticité, par exemple de la patte de fixation supérieure, en enlevant de la matière dans les parties où l'épaisseur le permet.

## Revendications

1. Dispositif de fixation (1) de garde-boue (2) de bicyclette à une tringle (3), comprenant :
- des moyens de fixation (25,45,76a,76b ;46,75a,75b) du dispositif (1) au garde-boue ; et
- des moyens de fixation du dispositif (1) à ladite tringle (3),
**caractérisé en ce que** les moyens de fixation du dispositif à la tringle comprennent une partie coiffant l'extrémité de la tringle comportant un passage de tringle (160) et une surface extérieure conique (154) destinée à coopérer avec un écrou conique (151).

2. Dispositif selon la revendication 1, **caractérisé en ce que** ladite surface extérieure conique (154) est filetée, ledit écrou conique comportant une surface intérieure taraudée (1 53) complémentaire.

3. Dispositif selon la revendication 1 ou 2, **caractérisé en ce que** ledit passage de tringle (160) est sensiblement conique.

4. Dispositif selon l'une des revendications précédentes, **caractérisé en ce que** ledit passage de tringle (160) comporte deux ailes de resserrage (155,156) adaptées à enserrer ladite tringle.

5. Dispositif selon l'une des revendications précédentes, **caractérisé en ce que** les moyens de fixation du dispositif au garde-boue comprennent une rainure (25,45,76a,76b) dans laquelle est destinée à être introduit le bord longitudinal (4A,4B) dudit garde-boue, ladite rainure comportant un fond de retenue (46,75a,75b) de forme complémentaire à un bourrelet (27A,27B) ménagé dans ledit bord longitudinal du garde-boue.

6. Dispositif selon la revendication 5, **caractérisé en ce que** les moyens de fixation du dispositif au garde-boue comprennent en outre des moyens d'empêchement du déplacement longitudinal du garde-boue comprenant des moyens de butée (40A, 40B ; 60 ; 56 ; 79A, 79B) ménagés dans ledit dispositif adaptés à coopérer avec des moyens de butée complémentaires (35,37A,37B ; 61 ; 55) ménagés dans ledit garde-boue.

7. Dispositif selon la revendication 6, **caractérisé en ce que** les moyens d'empêchement du déplacement longitudinal du garde-boue dans la rainure comprennent la butée du dispositif contre les bords latéraux (37A,37B) d'un bossage (35) ménagé en saillie vers l'extérieur dans le garde-boue.

8. Dispositif selon la revendication 6, **caractérisé en ce que** les moyens d'empêchement du déplacement longitudinal du garde-boue dans la rainure comprennent un logement (56) dans lequel est adapté à être inséré un bossage (55) ménagé en saillie vers l'intérieur dans le garde-boue.

9. Dispositif selon la revendication 6, **caractérisé en ce que** les moyens d'empêchement du déplacement longitudinal du garde-boue dans la rainure comprennent une paroi (60, 79a,79b) ménagée dans la rainure coopérant avec une encoche (61) de forme complémentaire ménagée transversalement dans le bord longitudinal (4A, 4B) du garde-boue.

10. Dispositif selon l'une des revendications précédentes, **caractérisé par** un corps allongé (5) et au moins une patte de fixation (20, 70a, 70b) ayant une zone de raccordement (21, 71a, 71b) avec la face extérieure dudit corps et faisant saillie de manière à définir entre elle et la surface extérieure du corps les moyens de fixation du bord longitudinal du garde-boue.

11. Dispositif selon les revendications 7 et 10, **caractérisé en ce que** la patte de fixation (20) est adaptée à être insérée dans le bossage (35) ménagé en saillie sur l'extérieur du garde-boue, les bords latéraux (40A,40B) de ladite patte de fixation étant adaptés à coopérer avec les bords latéraux (37A,37B) dudit bossage.

12. Dispositif selon la revendication 10, **caractérisé par** deux pattes de fixation (70a,70b) définissant chacune une rainure (75a, 75b) coopérant avec le bord latéral du garde-boue.

13. Dispositif selon la revendication 12, **caractérisé par** une patte supérieure (80) ayant une zone de raccordement (81) au corps du dispositif située entre les deux pattes de fixation (70a,70b) au dessus de leur zone de raccordement (71 a,71 b) respective, ladite patte supérieure étant destinée à venir au contact de la surface extérieure de la paroi du garde-boue.

14. Dispositif selon la revendication 12 ou 13, **caractérisé en ce que** les pattes de fixation (70a, 70b) présentent une portion d'extrémité (77a,77b) avec une surface supérieure (78a,78b) adaptée à venir au contact de la surface intérieure du garde-boue.

15. Dispositif selon les revendications 9 et 14, **caractérisé en ce que** dans la rainure (76a,76b) ménagée entre chaque patte de fixation et le corps du dispositif est prévue ladite paroi (79a,79b), deux encoches de forme complémentaire étant ménagées perpendiculairement dans le bord longitudinal du garde-boue destinées à coopérer chacune avec l'une des cloisons.

16. Dispositif selon l'une des revendications 1 à 9, **caractérisé en ce qu**'il comprend deux demi-coquilles (41,42) destinées à être assemblées et fixées sur la tringle à l'aide d'une vis de fixation, la rainure (46) de retenue du bord longitudinal du garde boue étant ménagée dans la demi-coquille avant (42).

17. Dispositif selon les revendications 7 et 16, **caractérisé par** un élargissement de la rainure de retenue du garde-boue du côté du passage de la tringle de manière à former un logement (49) dans lequel le bossage (35) en saillie sur l'extérieur du garde-boue est destiné à être introduit.

18. Dispositif selon les revendications 7 et 16, **caractérisé par** un élargissement de la rainure de retenue du garde-boue vers la paroi avant (42a) de la demi-coquille avant (42) de manière à former un logement (56) dans lequel le bossage (55) en saillie vers l'intérieur du garde-boue (2) est destiné à être introduit.

19. Dispositif selon l'une des revendications précédentes, **caractérisé en ce qu**'il est réalisé d'un seul tenant en matériau synthétique.

20. Dispositif selon l'une des revendications précédentes, **caractérisé en ce qu**'il est réalisé par moulage.

21. Système de fixation de garde-boue de bicyclette à au moins une tringle **caractérisé par** :
- un dispositif selon l'une quelconque des revendications 6 à 20 ;
- un garde-boue présentant lesdits moyens de butée complémentaires.

## Claims

1. Device (1) for attaching a bicycle mudguard (2) to a rod (3), comprising:
- means (25, 45, 76a, 76b; 46, 75a, 75b) for attaching the device (1) to the mudguard; and
- means for attaching the device (1) to said rod (3),
**characterized in that** the means for attaching the device to the rod comprise a part covering the end of the rod comprising a rod passage (160) and a tapered external surface (154) intended to cooperate with a tapered nut (151).

2. Device according to claim 1, **characterized in that** said tapered external surface (154) is threaded, said tapered nut comprising a complementary tapped internal surface (153).

3. Device according to claim 1 or 2, **characterized in that** said rod passage (160) is appreciably tapered.

4. Device according to one of the preceding claims, **characterized in that** said rod passage (160) comprises two gripper wings (155, 156) which are able to clasp said rod.

5. Device according to one of the preceding claims, **characterized in that** the means for attaching the device to the mudguard comprise a slot (25, 45, 76a, 76b) into which the longitudinal edge (4A, 4B) of said mudguard is intended to be introduced, said slot comprising a retaining bottom part (46, 75a, 75b) with a complementary shape to a beading (27A, 27B) provided on said longitudinal edge of the mudguard.

6. Device according to claim 5, **characterized in that** the means for attaching the device to the mudguard also comprise means for preventing the longitudinal displacement of the mudguard comprising stop means (40A, 40B; 60; 56; 79A, 79B) provided in said device which can cooperate with complementary stop means (35, 37A, 37B; 61; 55) provided in said mudguard.

7. Device according to claim 6, **characterized in that** the means for preventing the longitudinal displacement of the mudguard in the slot comprise the stop of the device against the lateral edges (37A, 37B) of a projection (35) arranged projecting outwards in the mudguard.

8. Device according to claim 6, **characterized in that** the means for preventing the longitudinal displacement of the mudguard in the slot comprise a housing (56) into which a projection (55) can be inserted arranged projecting inwards in the mudguard.

9. Device according to claim 6, **characterized in that** the means for preventing the longitudinal displacement of the mudguard in the slot comprise a wall (60, 79a, 79b) provided in the slot cooperating with a recess (61) of complementary shape arranged transversely in the longitudinal edge (4A, 4B) of the mudguard.

10. Device according to one of the preceding claims, **characterized by** an elongated body (5) and at least one attachment lug (20, 70a, 70b) having an area for connection (21, 71a, 71b) to the external surface of said body and projecting so as to define between it and the external surface of the body the means for attaching the longitudinal edge of the mudguard.

11. Device according to claims 7 and 10, **characterized in that** the attachment lug (20) can be inserted into the projection (35) arranged projecting on the outside of the mudguard, the lateral edges (40A, 40B) of said attachment lug being able to cooperate with the lateral edges (37A, 37B) of said projection.

12. Device according to claim 10, **characterized by** two attachment lugs (70a, 70b) each defining a slot (75a, 75b) cooperating with the lateral edge of the mudguard.

13. Device according to claim 12, **characterized by** an upper lug (80) having an area for connection (81) to the body of the device situated between the two attachment lugs (70a, 70b) above their respective connection area (71 a, 71 b), said upper lug being intended to make contact with the external surface of the wall of the mudguard.

14. Device according to claim 12 or 13, **characterized in that** the attachment lugs (70a, 70b) have an end portion (77a, 77b) with an upper surface (78a, 78b) which can make contact with the internal surface of the mudguard.

15. Device according to claims 9 and 14, **characterized in that** in the slot (76a, 76b), arranged between each attachment lug and the body of the device, said wall (79a, 79b) is provided, two recesses of complementary shape being arranged in a perpendicular manner in the longitudinal edge of the mudguard each intended to cooperate with one of the partitions.

16. Device according to one of claims 1 to 9, **characterized in that** it comprises two die halves (41, 42) intended to be mounted and attached to the rod using a fixing screw, the slot (46) for retaining the longitudinal edge of the mudguard being provided in the front die half (42).

17. Device according to claims 7 and 16, **characterized by** a widening of the slot for retaining the mudguard on the side of the rod passage so as to form a housing (49) into which the projection (35) projecting on the exterior of the mudguard is intended to be introduced.

18. Device according to claims 7 and 16, **characterized by** a widening of the slot for retaining the mudguard towards the front wall (42a) of the front die-half (42) so as to form a housing (56) into which the projection (55) projecting towards the interior of the mudguard (2) is intended to be introduced.

19. Device according to one of the preceding claims, **characterized in that** it is produced in one piece from a synthetic material.

20. Device according to one of the preceding claims, **characterized in that** is produced by moulding.

21. System for attaching a bicycle mudguard to at least one rod
**characterized by**:
- a device according to any one of claims 6 to 20;
- a mudguard having said complementary stop means.

## Patentansprüche

1. Vorrichtung (1) zum Befestigen eines Fahrradschutzblechs (2) an einer Strebe (3), aufweisend:
- Mittel (25, 45, 76a, 76b; 46, 75a, 75b) zum Befestigen der Vorrichtung (1) an dem Schutzblech, und
- Mittel zum Befestigen der Vorrichtung (1) an der Strebe (3),
**dadurch gekennzeichnet, dass** die Mittel zum Befestigen der Vorrichtung an der Strebe einen Teil enthalten, welcher das Ende der Strebe übergreift und eine Strebendurchführung (160) und eine kegelförmige Außenfläche (154) aufweist, die dazu bestimmt ist, mit einer Kegelmutter (151) zusammenzuwirken.

2. Vorrichtung nach Anspruch 1, **dadurch gekennzeichnet, dass** die kegelförmige Außenfläche (154) ein Außengewinde aufweist, wobei die Kegelmutter eine komplementäre Innenfläche (153) mit Innengewinde aufweist.

3. Vorrichtung nach Anspruch 1 oder 2, **dadurch gekennzeichnet, dass** die Strebendurchführung (160) im Wesentlichen kegelförmig ist.

4. Vorrichtung nach einem der vorangehenden Ansprüche, **dadurch gekennzeichnet, dass** die Strebendurchführung (160) zwei Spannschenkel (155, 156) enthält, die dazu geeignet sind, die Strebe einzuspannen.

5. Vorrichtung nach einem der vorangehenden Ansprüche, **dadurch gekennzeichnet, dass** die Mittel zum Befestigen der Vorrichtung an dem Schutzblech eine Nut (25, 45, 76a, 76b) enthalten, in welche die Längskante (4A, 4B) des Schutzblechs einzusetzen ist, wobei die Nut einen Halteboden (46, 75a, 75b) mit einer zu einer Wulst (27A, 27B) in der Längskante des Schutzblechs komplementären Form aufweist.

6. Vorrichtung nach Anspruch 5, **dadurch gekennzeichnet, dass** die Mittel zum Befestigen der Vorrichtung an dem Schutzblech ferner Mittel zum Verhindern der Längsverschiebung des Schutzblechs enthalten, welche Anschlagmittel (40A, 40B; 60; 56; 79A, 79B) aufweisen, die in der Vorrichtung ausgebildet und dazu geeignet sind, mit komplementären Anschlagmitteln (35, 37A, 37B; 61; 55) zusammenzuwirken, die in dem Schutzblech ausgebildet sind.

7. Vorrichtung nach Anspruch 6, **dadurch gekennzeichnet, dass** die Mittel zum Verhindern der Längsverschiebung des Schutzblechs in der Nut den Anschlag der Vorrichtung an den Längskanten (37A, 37B) eines Ansatzes (35) aufweisen, der nach außen vorstehend im Schutzblech ausgebildet ist.

8. Vorrichtung nach Anspruch 6, **dadurch gekennzeichnet, dass** die Mittel zum Verhindern der Längsverschiebung des Schutzblechs in der Nut eine Aufnahmemulde (56) enthalten, die dazu geeignet ist, einen Ansatz (55) aufzunehmen, welcher nach innen vorstehend in dem Schutzblech ausgebildet ist.

9. Vorrichtung nach Anspruch 6, **dadurch gekennzeichnet, dass** die Mittel zum Verhindern der Längsverschiebung des Schutzblechs in der Nut eine Wand (60, 79a, 79b) enthalten, die in der Nut ausgebildet ist und mit einer Aussparung (61) mit komplementärer Form zusammenwirkt, die quer in der Längskante (4A, 4B) des Schutzblechs ausgebildet ist.

10. Vorrichtung nach einem der vorangehenden Ansprüche, **gekennzeichnet durch** einen länglichen Körper (5) und zumindest eine Befestigungsklaue (20, 70a, 70b), die eine Anschlusszone (21, 71a, 71b) mit der Außenseite des Körpers hat und derart hervorsteht, dass zwischen ihr und der Außenfläche des Körpers die Mittel zum Befestigen der Längskante des Schutzblechs definiert sind.

11. Vorrichtung nach Anspruch 7 und 10, **dadurch gekennzeichnet, dass** die Befestigungsklaue (20) dazu geeignet ist, in den Ansatz (35) eingefügt zu werden, der an der Außenseite des Schutzblechs vorstehend ausgebildet ist, wobei die Längskanten (40A, 40B) der Befestigungsklaue dazu geeignet sind, mit den Längskanten (37A, 37B) des Ansatzes zusammenzuwirken.

12. Vorrichtung nach Anspruch 10, **gekennzeichnet durch** zwei Befestigungsklauen (70a, 70b), die jeweils eine Nut (75a, 75b) definieren, die mit der Längskante des Schutzblechs zusammenwirkt.

13. Vorrichtung nach Anspruch 12, **gekennzeichnet durch** eine obere Klaue (80) mit einer Anschlusszone (81) zum Körper der vorrichtung, die zwischen den beiden Befestigungsklauen (70a, 70b) über deren jeweiligen Anschlusszonen (71a, 71b) liegt, wobei die obere Klaue dazu bestimmt ist, die Außenfläche der Schutzblechwand zu berühren.

14. Vorrichtung nach Anspruch 12 oder 13, **dadurch gekennzeichnet, dass** die Befestigungsklauen (70a, 70b) ein Endstück (77a, 77b) mit einer Oberseite (78a, 78b) aufweisen, die dazu geeignet ist, die Innenseite des Schutzblechs zu berühren.

15. Vorrichtung nach Anspruch 9 und 14, **dadurch gekennzeichnet, dass** in der Nut (76a, 76b), die zwischen jeder Befestigungsklaue und dem Körper der Vorrichtung ausgebildet ist, die Wand (79a. 79b) vorgesehen ist, wobei zwei Aussparungen mit komplementärer Form, die quer in die Längskante der Schutzblechs eingelassen sind, dazu bestimmt sind, jeweils mit einer der Zwischenwände zusammenzuwirken.

16. Vorrichtung nach einem der Ansprüche 1 bis 9, **dadurch gekennzeichnet, dass** sie zwei Halbschalen (41, 42) enthält, die dazu bestimmt sind, mit Hilfe einer Befestigungsschraube zusammengefügt und an der Strebe befestigt zu werden, wobei die Haltenut (46) für die Längskante des Schutzblechs in die vordere Halbschale (42) eingelassen ist.

17. Vorrichtung nach Anspruch 7 und 16, **gekennzeichnet durch** eine Erweiterung der Haltenut für das Schutzblech auf der Seite der Durchführung für die Strebe, so dass eine Aufnahmemulde (49) gebildet wird, in welche der auf der Außenseite des Schutzblechs vorstehende Ansatz (35) einzuführen ist.

18. Vorrichtung nach Anspruch 7 und 16, **gekennzeichnet durch** eine Erweiterung der Haltenut für das Schutzblech zur vorderen Wand (42a) der vorderen Halbschale (42) hin, so dass eine Aufnahmemulde (56) gebildet wird, in welche der auf der Innenseite des Schutzblechs (2) vorstehende Ansatz (55) einzuführen ist.

19. Vorrichtung nach einem der vorangehenden Ansprüche, **dadurch gekennzeichnet, dass** sie einstückig aus Kunststoff hergestellt ist.

20. Vorrichtung nach einem der vorangehenden Ansprüche, **dadurch gekennzeichnet, dass** sie durch Formgießen hergestellt ist.

21. System zum Befestigen eines Fahrradschutzblechs an zumindest einer Strebe, **gekennzeichnet durch**:
- eine Vorrichtung nach einem der Ansprüche 6 bis 20,
- ein Schutzblech, welches die komplementären Anschlagmittel aufweist.
